# EUROPÄISCHE PATENTSCHRIFT

(11) **EP 1 697 028 B1**
(45) Veröffentlichungstag und Bekanntmachung des Hinweises auf die Patenterteilung: **13.08.2008**
(21) Anmeldenummer: 04804206.3
(22) Anmeldetag: 22.12.2004
(51) Int. Cl.: B01F 13/10, G05D 11/13

(54) **VIELFARBENMISCHKOPF**
MIXING HEAD FOR MANY COLOURED SUBSTANCES
TETE DE MELANGE POUR UNE PLURALITE DE PEINTURES

(30) Priorität: 22.12.2003 DE 10361103
(43) Veröffentlichungstag der Anmeldung: 06.09.2006
(73) Patentinhaber: Schütze, Thomas, 97453 Schonungen (DE)
(72) Erfinder: Schütze, Thomas, 97453 Schonungen (DE)
(74) Vertreter: LENZING GERBER
(86) Internationale Anmeldenummer: PCT/EP2004/014610
(87) Internationale Veröffentlichungsnummer: WO 2005/061086

(56) Entgegenhaltungen:
- DE-A1- 19 542 797
- GB-A- 1 272 258
- US-A- 4 070 008
- US-A- 5 614 135

## Beschreibung

Die vorliegende Erfindung betrifft eine Vorrichtung zum Mischen von mehr als zwei Farben bzw. Komponenten gemäß den Merkmalen des Oberbegriffs des Anspruch 1.

Um aus mehreren Grundtönen von Farben die fertigen Farbtöne zu erstellen, ist es erforderlich, die Grundtöne miteinander im richtigen Verhältnis zu vermengen. Hierbei sind vier generelle Probleme zu lösen. Zum Ersten muss eine sehr gute Dosiergenauigkeit für jede Farbkomponente zu jedem Zeitpunkt gewährleistet sein. Zum Zweiten müssen die benötigten Grundtöne zu genau definierten Zeitpunkten oder auch zeitgleich in die Mischkammer fließen. Zum Dritten müssen auch kleinste Beimengungen von z.B. unter 1 % Volumenanteil homogen in der Gesamtmenge vorvermischt werden. Als Letztes muss gewährleistet werden, dass nicht benötigte Farbkomponenten nicht ungewollt mit in den Mischkopf gelangen.

Eine gattungsgemäße Mischvorrichtung ist aus der DE19542797 bekannt, bei der ein Dosierventil für dünn- bis zähflüssige Medien bekannt ist. Dieses Dosierventil umfaßt ein Schußventil, das für die Zuführung des Mediums in eine Mischkammer vorgesehen ist, und ein Rezirkulationsventil, das für die Zurückführung des Mediums in einen Vorratsbehälter vorgesehen ist. Es ist jeweils entweder das Schußventil oder das Rezirkulationsventil geöffnet. Das Schußventil und das Rezirkulationsventil befinden sich in einem gemeinsamen Gehäuse, und die Druckkammern des Schußventils und des Rezirkulationsventils sind über eine Verbindungskammer miteinander verbunden. Die Mediumströmung in der Rezirkulation ist für jede Komponente mittels eines Rezirkulationsventils einstellbar. Eine Einregelung eines bestimmten Drucks des Mediums während der Rezikulationsphase erfolgt hierbei nicht. Es wird lediglich in der Rezirkulationsphase ein höherer Druck gefahren als während der Schußphase.

Aus der EP1044063 ist eine Mischmaschine zur dosierten Abgabe und kontinuierlichen Homogenisierung von Farbprodukten bekannt. Die Mischmaschine weist einen Mischkopf auf, der in seinem Zentrum eine Mischkammer aufweist, zu der radial verlaufende Zuführkanäle führen, welche mittels Nadelventilen verschließbar sind. Nachteilig bei dieser Mischmaschine ist, dass erst nach dem Öffnen der Nadelventile für die benötigten Komponenten die jeweiligen Komponentendrücke und Volumenströme eingeregelt werden, wodurch relativ viel Zeit vergeht, in der nicht die gewünschte Mischung aus dem Mischkopf austritt, da sich die erforderlichen Drücke und Materialflüsse erst einpegeln müssen.

Aus der DE 195 42 797 ist ein Verfahren und eine Vorrichtung zum Mischen von mehr als zwei Komponenten mit einer Rezirkulationsvorrichtung bekannkt.

Aus der US 5,614,135 ist ferner ein Verfahren und eine Vorrichtung zum Mischen von mehr als zwei Komponenten bekannt.

Es ist Aufgabe der vorliegenden Erfindung, eine Mischvorrichtung für mehr als zwei Komponenten zu schaffen, bei der unmittelbar nach dem Öffnen der Nadelventile die Komponenten mit dem richtigen Druck und Volumenstrom in die Mischkammer einfließen, ohne dass ein Einpegeln der Drücke und Volumenströme erfolgen muß.

Die gestellte Aufgabe wird erfindungsgemäß mit einer Vorrichtung mit den Merkmalen des Anspruchs 1 gelöst. Weitere vorteilhafte Ausgestaltungen der erfindungsgemäßen Vorrichtung ergeben sich durch die Merkmale der Unteransprüche. Ebenso wird ein Verfahren zur Mischung eines Mehrkomponentengemischs unter Verwendung der erfindungsgemäßen Vorrichtung gemäß den Merkmalen des Anspruchs 30 beansprucht.

Die erfindungsgemäße Vorrichtung zeichnet sich vorteilhaft dadurch aus, dass in der Rezirkulationsphase ein Einregeln der für die nachfolgende Mischung erforderlichen Komponentendrücke und Volumenströme möglich ist. Hierdurch wird vermieden, dass sich nach dem Öffnen der Nadelventile die erforderlichen Drücke und Volumenströme erst einpegeln bzw. einstellen müssen. Somit wird sofort nach dem Öffnen der Nadelventile das geforderte Mischverhältnis von der Vorrichtung ausgegeben.

Das grundsätzliche Problem bei derartigen Mischvorrichtungen ist, dass eine flüssige Komponente Xᵢ (z.B. die Grundfarbe) auf dem Weg von der Fördereinrichtung bzw. Dosierpumpe bis zum Eintritt in die Mischkammer bei einer definierten Fließmenge Qx ein eigenen Druckabfall erfährt, wobei die Mischkammer selbst einen Widerstand bildet, der für alle Komponenten gleich ist. Der Austrittsdruck in die Mischkammer ist in keinem Falle zu vernachlässigen. Des weiteren ist zu berücksichtigen, dass für jeder der Einzelkomponenten auch unterschiedliche Fließmengen Qxᵢ bis Qxₙ erforderlich sind, um unterschiedliche Rezepturen mischen zu können. D.h., dass jede Komponente Xᵢ mit unterschiedlichem Druck und Volumenstrom bei unterschiedlichen Rezepturen in die Mischkammer gefördert werden muß. Da die Abmessungen der Zuführleitungen konstant sind, müssen die Drücke für verschiedene Volumenströme jeweils neu ermittelt werden.

Dies soll durch die nachstehenden Tabellen für drei verschiedene beispielhafte Rezepturen verdeutlicht werden:

### Rezeptur 1:

| **Grundfarbe** | **Menge Q [cm³/min]** | **P_{Dosierer} [bar]** | **P_{Mischkammer} [bar]** | **dp [bar]** |
|---|---|---|---|---|
| Rot | 100 | 12 | 3 | 9 |
| Schwarz | 20 | 8 | 3 | 5 |
| Weiß | 10 | 5 | 3 | 2 |

### Rezeptur 2:

| **Grundfarbe** | **Menge Q [cm³/min]** | **P_{Dosierer} [bar]** | **P_{Mischkammer} [bar]** | **dp [bar]** |
|---|---|---|---|---|
| Rot | 10 | 4,5 | 3,5 | 1 |
| Schwarz | 20 | 8 | 3,5 | 4,5 |
| Weiß | 100 | 14 | 3,5 | 10,5 |

### Rezeptur 3:

| **Grundfarbe** | **Menge Q [cm³/min]** | **P_{Dosierer} [bar]** | **P_{Mischkammer} [bar]** | **dp [bar]** |
|---|---|---|---|---|
| Rot | 200 | 18 | 5 | 13 |
| Schwarz | 40 | 12 | 5 | 7 |
| Weiß | 20 | 9 | 5 | 4 |

Da sich die Differenzdrücke durch die Viskosität, Querschnitte, Fließmengen, Rheologie (Fließverhalten), Pigmente, Temperatur, etc. der Einzelkomponenten ändern, ist die Berechnung der benötigten Drücke äußerst komplex. Die Rezepturen 1 und 3 sind von den Verhältnissen gleich, nur die Austragsmenge wurde verdoppelt. Gleichsam bedeutet dies nicht, dass sich die Drücke verdoppeln. Zwar sind die Mengenverhältnisse bei den Rezepturen 1 und 2 identisch, da jedoch die einzelnen Grundfarben unterschiedliche Fließeigenschaften aufweisen, sind aufgrund der unterschiedlichen erforderlichen Differenzdrücke gänzlich verschiedene Druckverhältnisse und Werte einzuregeln.

Werden nun die jeweiligen erforderlichen "Einfließdrücke" in die Mischkammer nicht in der Rezirkulationsphase eingeregelt bzw. eingestellt, sind beim Start des Mischvorganges die Farbwerte mindestens so lange nicht konstant, bis sich Druck und Fluß jeder Einzelkomponente stabilisiert hat. Außerdem sind dann gerade nach einer solchen Startphase die Wandungen der gemeinsamen Gemischstrecke mit nicht korrektem Farbton benetzt, so dass es zur Verschleppung von einem "falschen" Farbton über eine länger Zeit kommt. Da zudem Temperaturschwankungen das Fließverhalten der einzelnen Komponenten beeinflussen, ist ein stetiges Anpassen der einzelnen Drücke auf die jeweiligen Umgebungsverhältnisse und Rezepturen notwendig. Dies ermöglicht vorteilhaft die erfindungsgemäße Vorrichtung, da die erforderlichen Abhängigkeiten von Fließverhalten, Volumenstrom und hierfür einzustellender Druck, insbesondere für die zu mischenden Rezepturen in der Rezirkulationsphase, in einem Speicher der Steuerung der Vorrichtung abgelegt sind. Durch Messen des Drucks in der Zuführleitung zwischen Fördereinrichtung und Rezirkulationsventil, welches vorteilhaft als 3/2-Wegeventil ausgebildet ist und später detailliert beschrieben ist, kann der Druck mittels der Druckregeleinrichtung in Form eines Dosierventils bzw. proportionalem Druckregelventil bei dem für die Mischung erforderlichen Volumenstrom, welcher von der jeweiligen Fördereinrichtung erbracht wird, eingeregelt werden. Selbstverständlich ist es auch möglich, dass die Druckregeleinrichtung selbst den Druck mißt und diesen entsprechend der Vorgaben einregelt.

Die erfindungsgemäße Vorrichtung weist einen Mischkopf auf, der sich vorteilhaft dadurch auszeichnet, dass die benötigten Komponenten bzw. Grundtöne in ihrem richtigen Mengenverhältnis zeitsynchron oder zu vorgegebenen Zeiten in die Mischkammer eingebracht und dort sofort mittels eines dynamischem Mischers vermischt werden. Somit haben auch Kleinstmengen keine Möglichkeit, sich irgendwo an der Mischkammerwandung abzusetzen. Die Mischkammerwandung ist dabei vorteilhaft mittels einer Art PTFE- oder gleichwertigen Beschichtung belegt, die es erlaubt, mit geringst möglichem Aufwand auch die Kleinstmengen von dieser Beschichtung wieder wegzuziehen. Damit eine hohe Dosiergenauigkeit erreicht wird, sind im Mischkopf selbst Nadelventile angeordnet, wobei die Ventilsitze der Nadelventile unmittelbar vor der Einlaßöffnung in die Mischkammer angeordnet sind, so dass nach dem Verschließen eines Nadelventils die Komponente nicht durch Verschleppen in die Mischkammer gezogen werden kann. Der Zuführkanal wird somit vorteilhaft direkt an der Auslaßöffnung zur Mischkammer mittels der Nadel des Nadelventils verschlossen. Durch die entsprechende Dichtung an der Nadelspitze ist eine absolute Dichtheit gewährleistet.

Durch einen oder mehrere entsprechende(n) Antrieb(e) der Nadeln des Mischkopfes ist ein exaktes Ansteuern der Nadelsitzventile im Mischkopf zu definierten Zeiten möglich.

Damit jede Komponente bei Bedarf ohne Zeitverzögerung mit eingestelltem Volumenstrom in die Mischkammer gefördert werden kann, befindet sich jede Komponente in Rezirkulation, solange das zugehörige Nadelsitzventil verschlossen ist. Hierdurch wird vorteilhaft gewährleistet, dass die Komponente stets mit einem entsprechenden vordefiniertem Volumenstrom und Druck nach dem Öffnen des Nadelsitzventils in die Mischkammer gelangt. Die Rezirkulation wird vorteilhaft mit einem 3/2-WegeSitzventil realisiert, welches sich möglichst dicht am Gehäuse des Mehrfarbenmischkopfes befindet, insbesondere an diesem angeordnet ist. Unter Rezirkulation wird verstanden, dass die Komponente mittels einer Fördereinrichtung von einem Vorratsbehältnis (Reservoir) über das 3/2-Wege-Ventil wieder zurück zum Vorratsbehältnis gefördert wird.

Der Mehrfarbenmischkopf weist vorteilhaft einen scheibenförmigen Grundkörper auf, in dem Zuführkanäle sich insbesondere von den flachen Seitenwandungen aus nach innen zur Mischkammer erstrecken, welche im Zentrum des Grundkörpers angeordnet sind. Die Zuführkanäle sind vorteilhaft gerade ausgestaltet, so dass sie zusammen mit Nadeln Nadelsitzventile bilden können. Sofern die Nadel aus flexiblem Material oder gebogen sind, können die Zuführkanäle selbstverständlich auch gekrümmt sein. In den Zuführkanälen sitzen die Nadeln der Sitzventile, wobei der Zuführkanal selbst oder ein darin eingelegtes Teil den Ventilsitz für die Nadelsitzventile bildet.

Die Kontur des Grundkörpers kann einem gleichseitigen Vieleck entsprechen, wobei von jeder flachen Seite ein Zuführkanal in Richtung Mischkammer sich radial oder parallel zur Radialen oder einem Winkel davon erstreckt. Durch entsprechende Anordnung der Zuführkanäle bzw. der Auslaßöffnungen der Zuführkanäle in die Mischkammer kann eine definierte Strömung in der Mischkammer erzeugt werden, welche zusammen mit dem in der Mischkammer angeordneten Mischer bzw. Quirl eine vollständige Vermengung der eingespritzten Komponenten gewährleistet.

An den flachen Seitenwandungen des Grundkörpers können unmittelbar oder über Zwischenteile insbesondere die 3/2-WegeVentile angeordnet werden. Die Eingänge der Zuführkanäle sind jeweils mit einem Ausgang eines 3/2-Wege-Ventils in Verbindung, wobei der Eingang des 3/2-Wege-Ventils mit einer Fördereinrichtung und der andere Ausgang mit einem Reservoir für die durch den Zuführkanal einzubringende Komponente bzw. Farbe in Verbindung sein kann. Solange der Eingang mit dem Ausgang, welcher mit dem Zuführkanal in Verbindung ist, zusammengeschaltet ist, kann vom Reservoir über die Fördereinrichtung und das 3/2-Wege-Ventil die Komponente in den Zuführkanal gelangen, sofern das Nadelsitzventil geöffnet ist. Sobald das Nadelsitzventil geschlossen ist, muss zeitgleich bzw. zeitnah das 3/2-Wege-Ventil umschalten, so dass die mittels der Fördereinrichtung aus dem Reservoir herausgeförderte Komponente über den anderen Ausgang zurück in das Reservoir gefördert wird und hierdurch die Rezirkulation ermöglicht wird. Der vorteilhafte Aufbau des 3/2-Wege-Ventils ist durch die Merkmale der Unteransprüche 13 bis 24 gekennzeichnet.

Das erfindungsgemäße 3/2-Wege-Sitzventil zeichnet sich vorteilhaft dadurch aus, dass die Antriebsseite von der Ventilseite mittels einer Membrandichtung voneinander getrennt ist. Die Membrandichtung ist resistent gegenüber abrasiven und/oder reaktiven Komponenten, so dass sich eine hohe Lebensdauer und ein geringer Verschleiß ergibt.

Das erfindungsgemäße 3/2-Wege-Ventil zeichnet sich durch einen sehr kleinen Schaltweg von ca. 0,5 - 2 Millimeter aus, wodurch in extrem kurzer Zeit von wenigen Millisekunden ein Umschalten möglich ist. Daher sind nur in einer sehr kurzen Zeit beide Ausgänge gleichzeitig geöffnet. Eine derart kurze Schaltzeit ist mit herkömmlichen Sitzventilen nicht zu realisieren. Ferner kann bei herkömmlichen Ventilen nicht festgestellt werden, wann das eine Ventil öffnet und das andere Ventil schließt, da sie nicht mechanisch miteinander gekoppelt sind.

Die Membran ist vorteilhaft eine Einzel- oder Mehrlagenmembran und wird durch den kurzen Schaltweg nur gering mechanisch beansprucht. Durch den Einsatz der Membrandichtung ist ein Verschleppen des zu schaltenden Mediums in eine dynamische Dichtung mit den beschriebenen Folgen wirksam unterbunden. Der Antriebsraum auf der antriebsseitigen Membranseite ist weiterhin in der Art gestaltet, dass sich die Membran bzw. die Membranen mit den anstehenden Brücken an das Gehäuse anlegen, und der Spalt zwischen der inneren und äußeren Membranaufnahme so klein ist, möglichst ca. 1 Millimeter, dass die Membran nur sehr kleinen Kräften ausgesetzt ist.

Bei der Konstruktion des erfindungsgemäßen 3/2-Wege-Sitzventils ist darauf stets zu achten, dass sich an den Membranen kein Medium absetzen kann, welches die Bewegungsfreiheit der Membran beeinträchtigen kann.

Der Medienraum auf der Mediumseite der Membran ist daher vorteilhaft derart zu gestalten, dass ein kleiner Spalt unter der Membran entsteht, wenn das Ventil in der einen Schaltstellung ist. Der dem Medium zur Verfügung stehende Weg zwischen Eingang und Ausgang ist dabei so gestaltet, dass das Medium möglichst nirgendwo zur Ruhe kommt und sich ablagern kann.

Vorteilhaft wird das erfindungsgemäße 3/2-Wege-Sitzventil bei sich absetzenden Flüssigkeiten, wie z.B. Metallic-Lacken eingesetzt. Durch die Möglichkeit des Umschaltens mittels des 3/2-Wege-Sitzventils kann das zu schaltende Medium, wie z.B. ein Metallic-Lack, stets in Bewegung (Zirkulation bzw. Rezirkulation) gehalten werden, bis z.B. die Lackierpistole betätigt wird, um den Metallic-Lack aufzutragen. Sofern eine Mengendosierung vorgenommen werden soll, weil z.B. mit einer definierten Menge Lack gearbeitet werden soll, ist die (Re-)Zirkulation des zu schaltenden Mediums durch die Applikationseinheit sinnvoll bzw. notwendig. Lange Wege von mehreren Metern als stehende Flüssigkeitssäule bereiten derart Probleme, dass bei geschlossener Applikationseinheit (Pistole) ein konstanter Druck von der Dosier-/Pumpeneinheit bis zur Applikationseinheit ansteht. Öffnet nun die Applikationseinheit, kommt für den ersten Augenblick zuviel Medium heraus, bis sich das zwangsläufig entstehende Druckgefälle im Materialschlauch wieder eingestellt hat.

Auch Dosieranlagen für Zwei- oder Mehrkomponentensysteme weisen dieses grundsätzliche Problem der statisch stehenden Flüssigkeitssäulen bis zum Mischer auf. Auch hier ist es sehr sinnvoll, alle benötigten Komponenten bis in die unmittelbare Nähe der Mischkammer in Bewegung, der sogenannten Rezirkulation zu halten. Erst wenn alle Komponenten im richtigen Verhältnis ohne Druckschwankung fließen, werden am Mischkopf diese 3/2-Wege-Ventile gleichzeitig auf Dosieren geschaltet. Damit wird gewährleistet, dass alle Komponenten im richtigen Verhältnis und in ihrer benötigten Einzelmenge zeitgleich in die Mischkammer fließen.

Nachfolgend wird anhand von Zeichnungen der erfindungsgemäße Mehrfarbenmischkopf sowie das 3/2-Wege-Ventil näher erläutert.

### Es zeigen:

- Fig. 1:: Schematische Darstellung eines Mischkopfes mit einer Fördereinrichtung für einen Zuführkanal sowie einer Reinigungseinrichtung für die Mischkammer;
- Fig. 2:: Querschnittsdarstellung durch den erfindungsgemäßen Mischkopf mit Antrieb für den Mischer;
- Fig. 3 bis 7:: verschiedene Ansichten eines erfindungsgemäßes 3/2-Wege-Sitzventils.

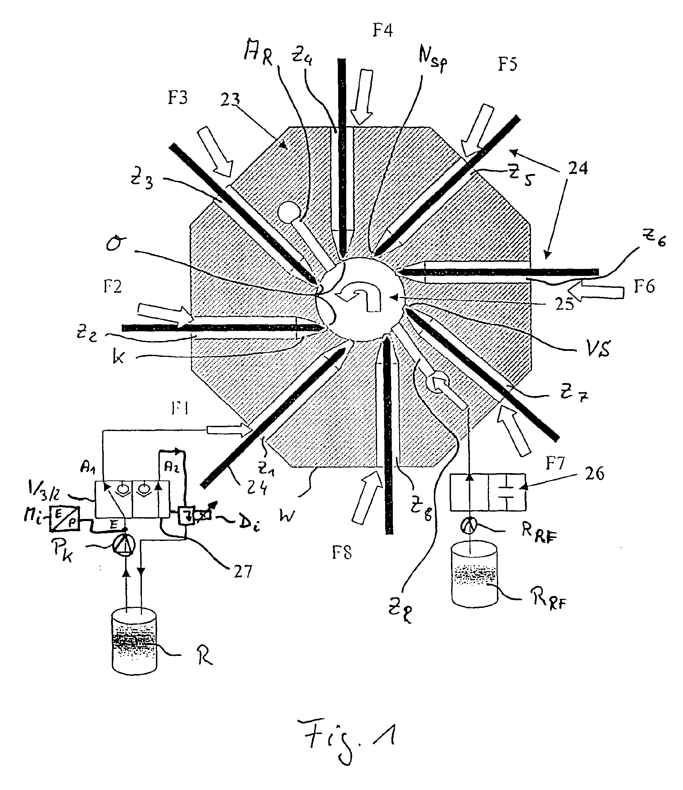

Die Figur 1 zeigt eine Draufsicht auf einen Vielfarbenmischkopf für acht Komponenten F1 bis F8, welche über Zuführkanäle Zᵢ, welche sich von den äußeren flachen Wandungen W des Grundkörpers 23 des Mischkopfes in radialer Richtung, Richtung Mischkammer 25 erstrecken. Die Zuführkanäle Zᵢ verjüngen sich im Bereich der Auslaßöffnung O konisch, wobei die Verjüngung K den Ventilsitz VS für die Nadeln 24 bzw. deren Nadelspitze N_{SP}, bildet.

Die Nadeln der Komponenten F2 bis F8 sind im geschlossenen Zustand dargestellt, wobei die Nadel 24 für die Komponente F1 zurück- bzw. vom Ventilsitz weg gezogen ist, so dass die vom Reservoir R mittels der Pumpe P zum Eingang E des 3/2-Wege-Sitzventils V_{3/2} geförderte Komponente über den Ausgang A₁ des 3/2-Wege-Sitzventils zum Zuführkanal Z₁ und von dort in die Mischkammer 25 gelangen kann. Sofern das 3/2-Wege-Sitzventil V_{3/2}, umgeschaltet wird, sollte möglichst zeitgleich auch die Nadel 24 des Nadelsitzventils für die Komponente F1 geschlossen werden. Im umgeschalteten Zustand fließt dann die mittels der Fördereinrichtung bzw. Pumpe P geförderte Komponente vom Eingang E zum Ausgang A₂ des 3/2-Wege-Sitzventils und von dort über die Rückführleitung hin zu einem Drosselventil Dᵢ und von dort zurück in das Reservoir R (Rezirkulation). Mittels der Druckeinstelleinrichtung Dᵢ kann somit während der Rezirkulationsphase bei eingestelltem Volumenstrom der für die nachfolgende Mischung erforderliche Druck eingeregelt werden. Der Druck in der Zuführleitung zwischen Fördereinrichtung P und dem Ventil 27 erfolgt mittels der Meßeinrichtung Mᵢ.

Zur Reinigung der Mischkammer 25 weist der Grundkörper 23 einen weiteren Zuführkanal Z_{R} auf, über den mittels einer Pumpe P_{RF} aus einem Reservoir R_{RF} über das 2/2-Wege-Ventil 26 ein Reinigungsfluid in die Mischkammer 25 gefördert werden kann. Ebenfalls kann ein zusätzlicher Auslaßkanal A_{R} vorgesehen werden, über den das Reinigungsfluid aus der Mischkammer nach dem oder während des Reinigungsvorgang(s) herausgelangen kann.

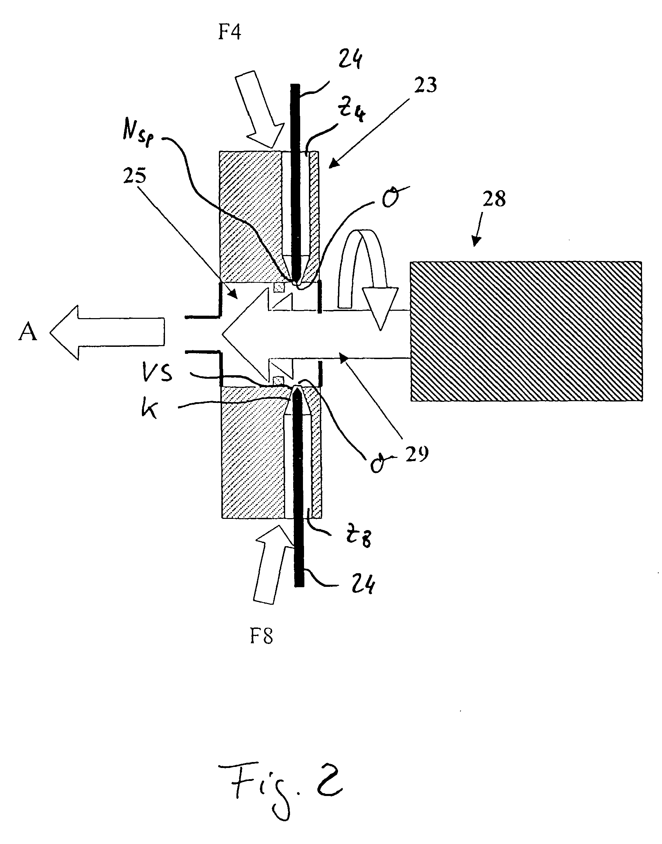

Die Figur 2 zeigt eine Querschnittsdarstellung durch den erfindungsgemäßen Mischkopf, bestehend aus Mischkörper 25, Grundkörper 23 sowie Nadeln 24. Der Quirl bzw. Mischer 29 wird über einen Antrieb 28, welcher außerhalb des Gehäuses 23 des Mischkopfes angeordnet ist, angetrieben und weist entsprechende Flügel zum Vermischen bzw. Vermengen der Komponenten in der Mischkammer 25 auf. Die in der Mischkammer 25 miteinander vermengten Komponenten werden über den axialen Auslaß A nach links aus der Mischkammer 25 heraus gefördert.

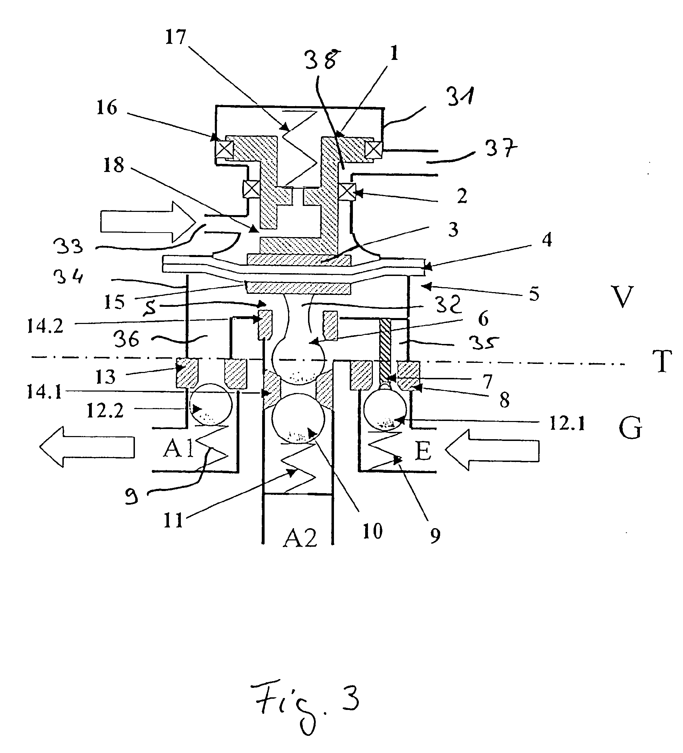

Figur 3 zeigt die schematische Querschnittsdarstellung einer möglichen Ausführungsform des erfindungsgemäßen 3/2-Wege-Sitzventils, wobei die Antriebsseite von der Ventilseite mittels einer Membran 4 abdichtend getrennt ist. Die Antriebsseite weist einen Kolben 1 auf, welcher mittels der Dichtungen 2, 16 abdichtend an dem Antriebsgehäuse 31 anliegt und in diesem verschieblich gelagert ist. Der Kolben 1 ist mittels der Druckfeder 17 federbelastet und wird aufgrund der Federkraft nach unten gedrückt, so dass der Ventilschließkörper 6, welcher mechanisch über den Verbindungskörper 32 mit der Membran 4 in Verbindung ist, gegen den unteren Ventilsitz 14.1, welcher als Doppeldichtsitz ausgeführt ist, gedrückt wird und somit der Ausgang A2 verschlossen ist. Das Antriebsgehäuse weist einen Einlaß 33 auf, über den in Pfeilrichtung in den Raum 18 ein Fluid eindrückbar ist, mittels dem der Kolben 1 nach unten verstellbar ist, wodurch das 3/2-Wege-Ventil in seine in Figur 3 dargestellte Position gebracht werden kann. Der Kolben 1 drückt gegen einen steuerseitigen Membranteller 3, welcher wiederum an der Membran 4, welche als Doppelmembran ausgebildet ist, abdichtend anliegt. Auf der Mediumseite ist zwischen der Membran 4 und dem Verbindungskörper 32 ein weiterer Membranteller materialseitig angeordnet, welcher ebenfalls abdichtend an der Membran 4 anliegt. Die Membran 4 ist zwischen den Gehäuseteilen 31 und 34 abdichtend eingespannt. Die mechanische Verbindung der beiden Gehäuseteile ist in Figur 3 nicht dargestellt. Der Verbindungskörper 32, an dem der Ventilschließkörper 6, welcher als Kugel ausgebildet ist, angeformt ist, durchgreift die Ventilteller 3, 15 sowie die Membran 4 und ist mittels einer Schraubverbindung im Kolben 1 verankert. Der Verbindungskörper 32 drückt dabei die Ventilteller 3 und 15 gegen die Membran 4, wodurch eine dauerhafte Abdichtung zwischen der Materialseite und der Antriebsseite realisiert ist. Im Gehäuseteil 34 ist ein weiterer Ventilsitz 14.2 angeordnet, gegen den der Ventilschließkörper 6 abdichtend gedrückt wird, sobald der Raum 18 mittels eines Fluids gefüllt und der Kolben 1 nach unten (Figur 3) verstellt ist. In der in Figur 1 dargestellten Stellung des Ventilschließkörpers 6 kann das Medium über den Eingang E, um die Eingangskugel 12.1 herum und durch den Dichtsitz 8 in die Kammer 35 des Ventils gelangen. Von dort aus umfließt es den Ventilschließkörper 6 an seiner Oberseite und gelangt durch den Ventilsitz 14.2 in eine weitere Kammer 36, von der aus das Medium zum Ausgang A1 gelangt, indem es die Kugel 12.2 entgegen der Federkraft der Schließfeder 9 verstellt.

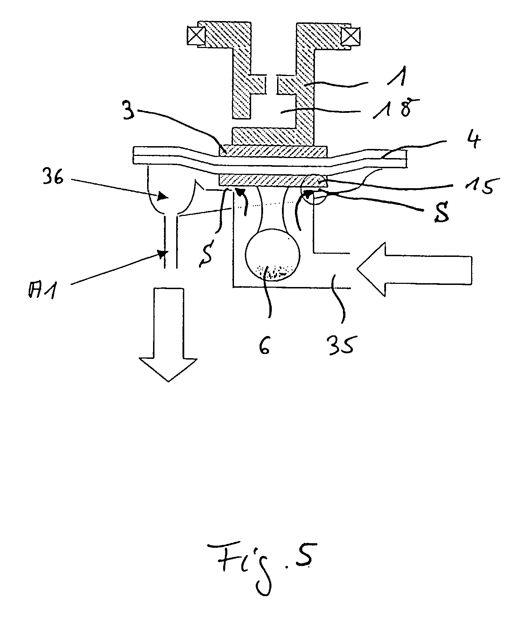

Die Figur 5 zeigt eine Ausschnittsvergrößerung im Bereich der Membran 4. Zwischen dem materialseitigen Membranteller 15 und dem Gehäuse existiert lediglich ein enger Spalt, der die Komponente gemäß der im Kanal 35 eingezeichneten Pfeile zwingt, in einem Winkelbereich von bis zu 360° um den Membranteller 15 herum in die Kammer 36 zu fließen. Die Kammer 36 ist schneckenartig aufgebaut, wobei ihr Querschnitt zum Ausfluß A1 hin zunimmt, so dass im gesamten Raum 36 ein Materialfluß der zu schaltenden Komponente entsteht, wodurch es zu keinen Ablagerungen im Raum 36 sowie an der Membran kommen kann.

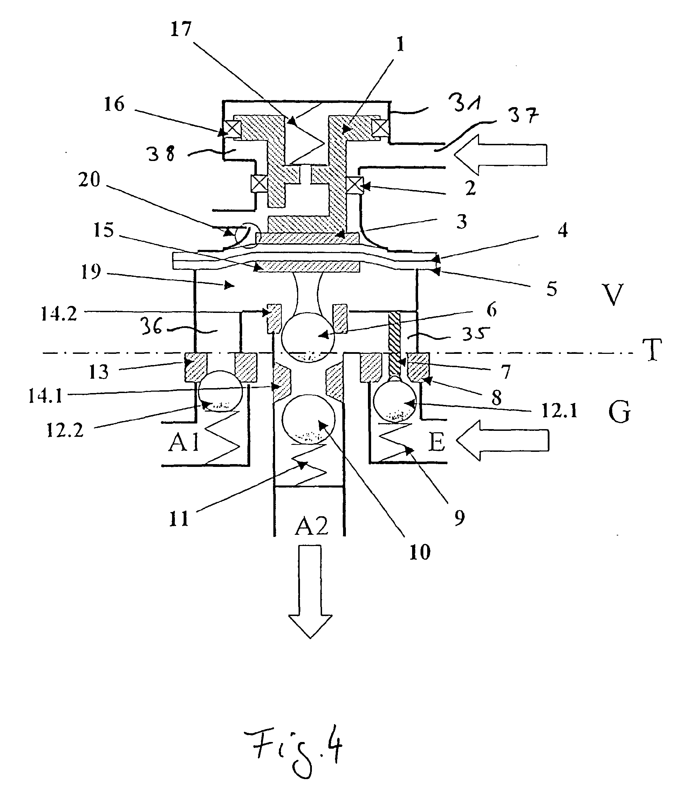

Die Figur 4 zeigt den Schaltzustand, bei dem die geschaltete Komponente vom Eingang zum Ausgang A2 geschaltet ist, indem der Kolben 1 und mit ihm der Ventilschließkörper 6 nach oben verstellt ist, wodurch der Ventilschließkörper 6 abdichtend an dem Ventilsitz 14.2 anliegt und somit die über den Eingang E in den Raum 35 gelangte Komponente nur über den Abfluß A2 aus dem Ventil heraus gelangen kann. Um das Ventil in den Schaltzustand gemäß Figur 2 zu schalten, wird über den steuerseitigen Eingang 37 in den Raum 38 ein Fluid eingebracht, welches den Kolben 1 nach oben verstellt.

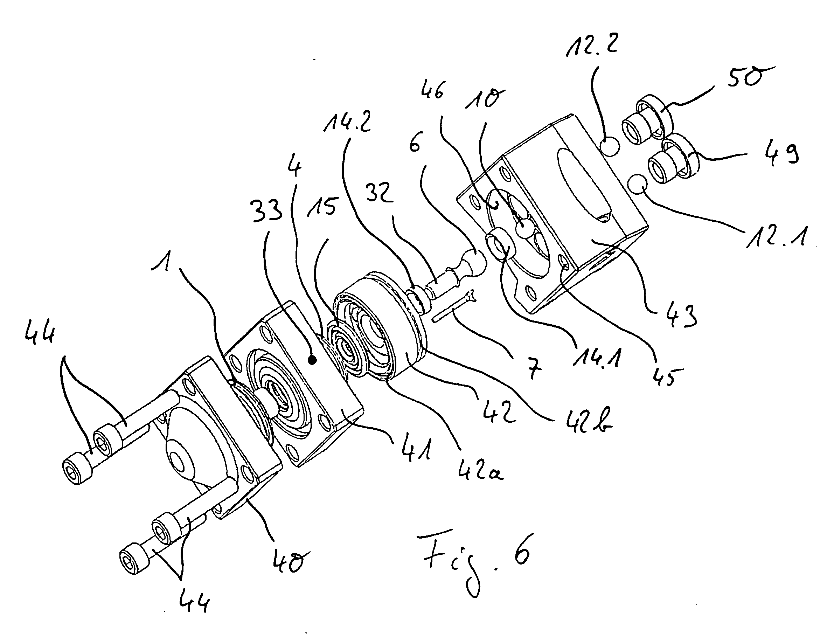

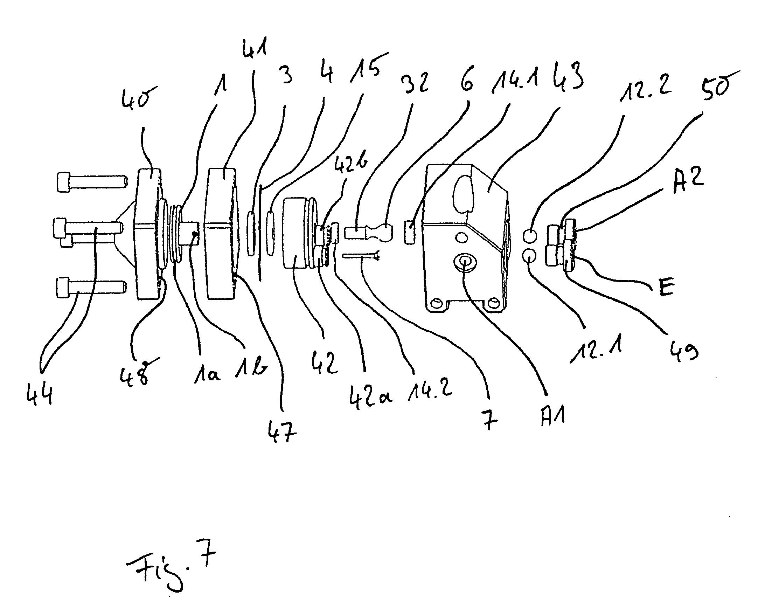

Die Figuren 6 und 7 zeigen perspektivische Ansichten einer möglichen Ausführungsform eines erfindungsgemäßen 3/2-Wege-Sitzventils mit Membran.

Das 3/2-Wege-Sitzventil besteht aus vier Gehäuseteilen 40, 41, 42 und 43. Schrauben 44 durchgreifen die Gehäuseteile 40, 41 und 42 und wirken mit ihrem Außengewinde mit Innengewinden 45 im Gehäuseteil 43 zusammen. Das Gehäuseteil 42 liegt in Aussparungen 46, 47 der Gehäuseteile 41 und 43 ein, so dass die Gehäuseteile 41 und 43 mit ihren flachen Seiten aneinandergrenzen.

Das vierte Gehäuseteil 40 bildet zusammen mit dem dritten Gehäuseteil 41 die Arbeitsräume 18 und 38 für den hydraulischen bzw. pneumatischen Antrieb des Ventils. Der Kolben 1 weist eine äußere umlaufende Nut 1a auf, in der eine Kolbenstangendichtung einliegt, welche den Kolben 1 gegen die Innenwandung der zylindrischen Aussparung 48 abdichtet. Der Kolben 1 hat einen angeformten zylindrischen Vorsprung 1b, der an seiner Stirnseite ein Bohrung mit Innengewinde aufweist, in welches der Verbindungskörper 32 mit seinem Außengewinde einschraubbar ist. Zusätzlich weist der Vorsprung 1b eine Bohrung auf, die einen Austritt im Bereich der Mantelfläche des Vorsprungs und einen Austritt an der Stirnseite des Vorsprungs hat, wodurch das Steuermedium für den Antrieb, welches über einen Kanal, welche an der Außenseite des Gehäuseteils 41 - Öffnung 33 - beginnt und sich bis hinter die Membran auf deren zur Antrieb gewandten Seite erstreckt. Durch Eindrücken eines Fluids in den Kanal 33 wird der Ventilschließkörper 6 nach links verstellt und gegen den Ventilsitz 14.2 gedrückt.

Der Verbindungskörper 32 durchgreift die an beiden Seiten der Membran 4 angeordneten Ventilteller 3 und 15, wobei die Ventilteller 3, 15 aufgrund der Anschraubkraft des Verbindungskörpers 32 abdichtend gegen die Membran 4 gedrückt werden. Zur besseren Übersicht ist die Membran lediglich in der Figur 7 dargestellt. Die Membran 4 liegt ihrerseits fest eingespannt zwischen der Stirnwand der Ausnehmung 47 des dritten Gehäuseteils 41 und der Stirnwand 42a des zweiten Gehäuseteils 42. Aufgrund der Abdichtungen kann kein Medium von der Antriebsseite zur Ventilseite (und umgekehrt) gelangen.

Das Gehäuseteil 42 ist ein im wesentlichen flacher zylindrischer Körper 42, welcher an seiner dem Ventilschließkörper 6 zugewandten flachen Seite zwei Vorsprünge aufweist, welche Kanäle aufweisen, die mit den Anschlußstücken 49 und 50 zusammenwirken. In einem Kanal ist ein Vorsprung bzw. Dorn 7 angeordnet, der die Ventilkugel 12.1 im montierten Zustand des Ventils gegen die Federkraft einer nicht dargestellten Feder vom Ventilsitz 8 wegdrückt und somit den Eingang E des Ventils öffnet. Wird der Antrieb vom Ventilgrundkörper 43 abgenommen, so verschließt der Eingang E mittels der Ventilkugel 12.1 und es kann kein zu steuerndes Medium aus evtl. noch angeschlossenen Leitungen zurück in das geöffnete Ventil strömen. Gleiches gilt für die Ausgänge A1 und A2, welche ebenfalls mittels Rückschlagventilen gesichert sind. Das dritte Gehäuseteil 42 weist an seiner Mantelfläche eine umlaufende Nut 42 b zur Aufnahme einer Ringdichtung (nicht dargestellt) auf, so dass im montierten Zustand des Ventils kein Medium außen um das zweite Gehäuseteil 42 herum von der Ventilseite zur Antriebsseite und umgekehrt gelangen kann.

## Patentansprüche

1. Vorrichtung zum Mischen von mehr als zwei Farben bzw. Komponenten (Fᵢ), bestehend aus einem Grundkörper (23), welcher eine Mischkammer (25) aufweist, in der mehrere Zuführkanäle (Zᵢ) zum Einbringen der Farben bzw. Komponenten (Fᵢ) in die Mischkammer (25) enden, und wobei die Zuführkanäle (Zᵢ) mittels Nadelventilen (24) verschließbar sind, wobei Fördereinrichtungen (Pᵢ) die Komponenten (Fᵢ) von ihrem zugehörigen Vorratsbehältnis hin zum jeweiligen Zuführkanal (Zᵢ) fördern, wobei bei geschlossenem Nadelventil (24), d.h. in der Rezirkulation, die Komponente zurück in den Vorratsbehälter fließt, wobei ein Ventil (27) wahlweise die Fördereinrichtung (Pᵢ) mit dem zugehörigen Zuführkanal (Zᵢ) oder dem Vorratsbehälter (R) verbindet, **dadurch gekennzeichnet, dass** zumindest zwischen jedem Ventil (27) und dem zugehörigen Vorratsbehältnis (R) ein proportional Druckregelventil (Dᵢ) zur Einstellung bzw. -regelung eines vorbestimmbaren Drucks zwischengeschaltet ist, und dass jeweils eine Meßeinrichtung (Mᵢ) den Druck in der jeweiligen Verbindungsleitung zwischen jeder Fördereinrichtung (Pᵢ) und zugehörigem Ventil (27) ermittelt und eine Steuereinrichtung anhand des ermittelten Drucks das jeweilige Druckregelventil (Dᵢ) ansteuert.

2. Vorrichtung nach Anspruch 1, **dadurch gekennzeiehnet, dass** die Steuereinrichtung (S) einen Speicher (Sp) aufweist, in dem eine Wissensbasis abgelegt ist, anhand derer die Steuereinrichtung (S) den mittels des jeweiligen Druckventils (Dᵢ) einzuregelnden Druck ermittelt und entsprechende Steuersignale für das Druckregelventil (Dᵢ) generiert.

3. Vorrichtung nach Anspruch 2, **dadurch gekennzeichnet, dass** in der Wissensbasis die Zusammenhänge zwischen den Größen Volumenstrom, Viskosität, Temperaturverhalten, Fließverhalten, erforderlicher Druck in der Mischkammer und einzuregelnder Druck für die in Rezirkulation befindlichen Komponenten abgelegt sind.

4. Vorrichtung nach einem der vorherigen Ansprüche, **dadurch gekennzeichnet, dass** eine Steuerung, insbesondere die Steuereinrichtung (S) die für die Mischung erforderlichen Nadelventile (24) und Ventile (27) zeitgleich oder zeitnah schaltet.

5. Vorrichtung nach einem der vorherigen Ansprüche, **dadurch gekennzeichnet, dass** die Steuerung die Vorrichtung frühestens erst dann von der Rezirkulation in den Mischbetrieb schaltet, wenn die Meßein-richtungen für die jeweils benötigten Komponenten den jeweils erforderlichen Druck ermittelt haben.

6. Vorrichtung nach einem der vorherigen Ansprüche, **dadurch gekennzeichnet, dass** die Vorrichtung einen Mischkopf aufweist, dessen Zuführkanäle (Zᵢ) sich vom äußeren Rand (W) seine Grundkörpers (23) nach innen hin zur Mischkammer (25) erstrecken.

7. Vorrichtung nach einem der vorhergehenden Ansprüche, **dadurch gekennzeichnet, dass** sich die Zuführkanäle (Zᵢ) im Endbereich vor dem Eintritt in die Mischkammer (25) vom Querschnitt konisch verjüngen, wobei die konische Verjüngung (K) den Ventilsitz (VS) für die Ventilnadel (24) bildet.

8. Vorrichtung nach einem der vorhergehenden Ansprüche, **dadurch gekennzeichnet, dass** sich die Zuführkanäle (Zᵢ) in radialer Richtung zur Mischkammer (25) und/oder parallel zur radialen Richtung im Grundkörper (23) erstrecken.

9. Vorrichtung nach einem der vorhergehenden Ansprüche, **dadurch gekennzeichnet, dass** die Auslaßöffnungen (O) der Zuführkanäle (Zᵢ) derart angeordnet bzw. ausgerichtet sind, dass über die Zuführkanäle (Zᵢ) die Farben bzw. Komponenten (Fᵢ) radial oder tangential oder in einem Winkel dazwischen in die Mischkammer (25) eingebracht bzw. eingespritzt werden.

10. Vorrichtung nach einem der vorhergehenden Ansprüche, **dadurch gekennzeichnet, dass** die Mischkammer (25) einen insbesondere axialen Auslaß (A) zur Ausgabe der miteinander vermischten Farben bzw. Komponenten hat.

11. Vorrichtung nach einem der vorhergehenden Ansprüche, **dadurch gekennzeichnet, dass** Rühreinrichtung (29) z.B. in Form eines Quirls in der Mischkammer (25) angeordnet ist, der die eingespritzten Komponenten (Fᵢ) miteinander vermengt.

12. Vorrichtung nach einem der vorhergehenden Ansprüche, **dadurch gekennzeichnet, dass** der Grundkörper (23) scheibenförmig ist, wobei die Zuführkanäle (Zᵢ) sich von den flachen Seitenwandungen (W) aus nach innen zur Mischkammer (25) erstrecken.

13. Vorrichtung nach Anspruch 12, **dadurch gekennzeichnet, dass** die Kontur des Grundkörpers (23) einem gleichseitigen Vieleck entspricht, wobei die Anzahl der flachen Seitenwandungen (W) der Anzahl der Zuführkanäle (Zᵢ) entspricht.

14. Vorrichtung nach einem der vorhergehenden Ansprüche, **dadurch gekennzeichnet, dass** sich in die Mischkammer (25) mindestens ein Kanal (Z_{R}) zur Einleitung eines Reinigungsfluids erstreckt.

15. Vorrichtung nach einem der vorhergehenden Ansprüche, **dadurch gekennzeichnet, dass** die Ventilnadeln (24) hydraulisch, pneumatisch, magnetisch oder elektromechanisch angetrieben sind.

16. Vorrichtung nach einem der vorhergehenden Ansprüche, **dadurch gekennzeichnet, dass** mindestens ein Zuführkanal mit einem Ausgang (A₁) eines zugehörigen 3/2-Wege-Sitzventils (V_{3/2}) in Verbindung ist, wobei der Eingang E des 3/2-Wege-Sitzventils (V_{3/2}) mit einer Fördereinrichtung (P) und der andere Ausgang (A₂) mit einem Reservoir (R) für die durch den Zuführkanal (Zᵢ) einzubringende Komponente bzw. Farbe (Fᵢ) in Verbindung ist.

17. Vorrichtung nach Anspruch 16, **dadurch gekennzeichnet, dass** das 3/2-Wege-Sitzventil (V_{3/2}) einen angetriebenen Schließkörper (6) aufweist, welcher zwischen zwei Ventilsitzen (14.1, 14.2) hin- und herbewegbar ist, wobei der Ventilschließkörper (6) über einen Verbindungskörper (32) mit einem Ventilantrieb in Verbindung ist, wobei eine Membran (4) die Antriebsseite von der Ventilseite abdichtend trennt.

18. Vorrichtung nach Anspruch 17, **dadurch gekennzeichnet, dass** die Membran (4) eine mehrlagige Membran ist.

19. Vorrichtung nach Anspruch 17 oder 18, **dadurch gekennzeichnet, dass** die Membran (4) zwischen zwei Gehäuseteilen (31,34) abdichtend einliegt.

20. Vorrichtung nach einem der Ansprüche 17 bis 19, **dadurch gekennzeichnet, dass** die Membran (4) eine Tellermembran ist, welche von dem Verbindungskörper (32) durchgriffen ist.

21. Vorrichtung nach einem der Ansprüche 17 bis 20, **dadurch gekennzeichnet, dass** der Verbindungskörper (32) direkt oder über die Membran (4) mit einem Kolben (1) in Verbindung ist, und der Kolben (1) verschieblich in einem Gehäuseteil (31) einliegt und das Gehäuseteil (31) in zwei Arbeitsräume unterteilt.

22. Vorrichtung nach Anspruch 21, **dadurch gekennzeichnet, dass** der Kolben (1) mittels einer Feder (17) druckbeaufschlagt ist, derart, dass die Feder (17) den Ventilschließkörper (6) gegen einen Ventilsitz (14.1) im nicht angetriebenen Zustand des Ventils drückt.

23. Vorrichtung nach einem der Ansprüche 17 bis 22, **dadurch gekennzeichnet, dass** das Ventil vier Gehäuseteile aufweist, wobei ein erstes Gehäuseteil (43) durch einen Ventilgrundkörper gebildet ist, welcher Kanäle für die Ventil-Ein- (E) und -Auslässe (A1,A2), sowie einen ersten Ventilsitz aufweist, und ein zweites Gehäuseteil (42) den Ventilschließkörper (6) und den zweiten Ventilsitz aufweist, wobei das zweite Gehäuseteil (42) teilweise im ersten Gehäuseteil (43) und einem dritten Gehäuseteil (41) einliegt, wobei die Membran (4) zwischen dem zweiten und dritten Gehäuseteil (41, 42) abdichtend einliegt, und in dem vierten Gehäuseteil (43) der Antrieb, insbesondere der Kolben (1) angeordnet ist.

24. Vorrichtung nach einem der Ansprüche 17 bis 23, **dadurch gekennzeichnet, dass** in allen Ein- bzw. Ausgängen (E, A₁, A₂) federbelastete Kugeln (10, 12.1, 12.2) angeordnet sind, wobei Federn (9,11) die Kugeln (10, 12.1, 12.2) in Richtung von Dichtsitzen (8, 13, 14.1) druckbeaufschlagen.

25. Vorrichtung nach Anspruch 24, **dadurch gekennzeichnet, dass** zumindest die Kugel (12.1) in einem Eingang (E) des Ventils (V_{3/2}) mittels eines Vorsprungs bzw. Dorns (7), welcher am zweiten Gehäuseteil angeordnet ist, im zusammengebauten Zustand des Ventils von dem zugehörigen Dichtsitz (8) abgehoben ist.

26. Vorrichtung nach einem der Ansprüche 17 bis 25, **dadurch gekennzeichnet, dass** das zweite Gehäuseteil einen zylindrischen Grundkörper aufweist, der einen entlang der Achse durchgehenden ersten Kanal aufweist, wobei im ersten Kanal ein Ventilsitz für den Ventilschließkörper angeordnet ist, und dass ein zweiter durchgehender Kanal koaxial zum durchgehenden ersten Kanal angeordnet ist, und sich ein weiterer dritter Kanal, ausgehend von der zweiten flachen Seite des Grundkörpers bis zum ersten Kanal im Bereich vor dem Ventilsitz, erstreckt.

27. Vorrichtung nach Anspruch 26, **dadurch gekennzeichnet, dass** der Grundkörper eine umlaufende Nut aufweist, in der eine Ringdichtung zur Abdichtung gegenüber dem ersten Gehäuseteil einliegt.

28. Vorrichtung nach Anspruch 27, **dadurch gekennzeichnet, dass** an der zweiten flachen Seite des Grundkörpers zwei zylindrische Vorsprünge angeformt sind, durch die sich der zweite bzw. dritte Kanal erstreckt, und die Vorsprünge abdichtend im ersten Gehäuseteil einliegen, wobei die Kanäle mit Kanälen des ersten Gehäuseteils korrespondieren.

29. Verfahren zum Mischen von mehreren Komponenten unter Verwendung einer Vorrichtung nach einem der vorhergehenden Ansprüche, **dadurch gekennzeichnet, dass** in einem ersten Verfahrensschritt, welcher als Rezirkulation bezeichnet wird, die Komponenten bei geschlossenen Nadelventilen von den zugehörigen Fördereinrichtungen über das Ventil (27) und die Einrichtung zurück zum zugehörigen Vorratsbehältnis gefördert werden, wobei die Fördereinrichtungen derart angesteuert werden, dass sie die jeweilige Komponente mit einem vorbestimmten Volumenstrom fördern, der für den nächsten Mischvorgang benötigt wird, und das die Einrichtung zur Einstellung eines Drucks in der Verbindungsleitung zwischen Ventil (27) und Fördereinrichtung einen vorbestimmten Druck einstellt bzw. regelt.

30. Verfahren nach Anspruch 29, **dadurch gekennzeichnet, dass** nach Erreichen eines konstanten Druckniveaus und Materialflusses die Rezirkulation beendet und durch Öffnen der jeweils den benötigten Komponenten zugeordneten Nadelventile und Umschalten der zugehörigen Ventile (27) der Mischvorgang eingeleitet wird.

31. Verfahren nach Anspruch 30, **dadurch gekennzeichnet, dass** das Öffnen der Nadelventile und Umschalten der Ventile (27) zeitnah oder zeitgleich erfolgt.

## Claims

1. Device for mixing more than two colours and/or components (Fᵢ), consisting of a base body (23), which is provided with a mixing chamber (25), wherein a plurality of supply channels (Zᵢ) which are used to introduce colours and/or components (Fᵢ) into the mixing chamber (25) end, and wherein the supply channels (Zᵢ) can be closed by means of needle valves (24), wherein conveying devices (Pᵢ) convey the components (Fᵢ) from the associated storage container thereof to the respective supply channel (Zᵢ), wherein, the component flows back into the storage container i.e. in recirculation, when the needle valve (24) is closed, wherein a valve (27) selectively connects the conveying device (Pᵢ) to the associated supply channel (Zᵢ) or the storage container (R), **characterized in that** at least one proportional pressure control valve (Dᵢ), which is used to adjust and/or regulate a predeterminable pressure is inserted between each valve (27) and the associated storage container (R), and **in that** in each case a measuring device (Mᵢ) determines the pressure in the respective connection line between each conveying device (Pᵢ) and the associated valve (27) and a control device controls the respective pressure control valve (Dᵢ) by means of the determined pressure.

2. Device according to Claim 1, **characterized in that** the control device (S) has a memory (Sp) in which a knowledge base is stored by means of which the control device (S) determines the pressure to be regulated by means of the respective pressure valve (Dᵢ) and generates corresponding control signals for the pressure control valve (Dᵢ).

3. Device according to Claim 2, **characterized in that** the interrelationships between the values of flow rate, viscosity, temperature behaviour, flow behaviour, pressure required in the mixing chamber and pressure to be regulated for the components in recirculation are stored in the knowledge base.

4. Device according to any one of the preceding claims, **characterized in that** a control, in particular the control device (S) switches the needle valves (24) and valves (27) necessary for the mixture at the same or near the time.

5. Device according to any one of the preceding claims, **characterized in that** the control switches the device from the recirculation to the mixing process at the earliest only when the measuring devices have determined the pressure necessary in each case for the components required in each case.

6. Device according to any one of the preceding claims, **characterized in that** the device has a mixing head, whose supply channels (Zi) extend from the outside edge (W) of its base body (23) inwardly to the mixing chamber (25).

7. Device according to any one of the preceding claims, **characterized in that** the supply channels (Zᵢ) in the final area are conically tapered in their cross section before the inlet to the mixing chamber (25), wherein the conical taper (K) forms the valve seat (VS) for the valve needle (24).

8. Device according to any one of the preceding claims, **characterized in that** the supply channels (Zᵢ) extend to the mixing chamber (25) in the radial direction and/or parallel to the radial direction in the base body (23).

9. Device according to any one of the preceding claims, **characterized in that** the outlet openings (O) of the supply channels (Zᵢ) are arranged and/or aligned so that the colours and/or components (Fᵢ) are introduced and/or injected radially or tangentially or at an angle inbetween into the mixing chamber (25) via the supply channels (Zᵢ).

10. Device according to any one of the preceding claims, **characterized in that** the mixing chamber (25) has a particularly axial outlet opening (A) for discharging the colours and/or the components mixed with one another.

11. Device according to any one of the preceding claims, **characterized in that** a stirring device (29) is arranged for example in the form of a swirler in the mixing chamber (25), which mixes the injected components (Fᵢ) together.

12. Device according to any one of the preceding claims, **characterized in that** the base body (23) is disk-shaped, wherein the supply channels (Zᵢ) extend out from the flat side walls (W) inwards to the mixing chamber (25).

13. Device according to Claim 12, **characterized in that** the contour of the base body (23) corresponds to an equilateral polygon, wherein the number of flat side walls (W) corresponds to the number of supply channels (Zᵢ).

14. Device according to any one of the preceding claims, **characterized in that** at least one channel (Z_{R}) extends into the mixing chamber (25) for introduction of a cleaning fluid.

15. Device according to any one of the preceding claims, **characterized in that** the valve needles (24) are hydraulically, pneumatically, magnetically or electromechanically operated.

16. Device according to any one of the preceding claims, **characterized in that** at least one supply channel is connected to an outlet (A₁) of an associated 3/2 way seat valve (V_{3/2}), wherein the inlet E of the 3/2 way seat valve (V_{3/2}) is connected to a conveying device (P) and the other outlet (A₂) to a reservoir (R) for the component and/or colour (Fᵢ) to be introduced by the supply channel (Zᵢ).

17. Device according to Claim 16, **characterized in that** the 3/2 way seat valve (V_{3/2}) has a driven closing body (6), which can be moved to and fro between two valve seats (14.1, 14.2), wherein the valve closing body (6) is connected via a connecting body (32) to a valve drive, wherein a membrane (4) sealingly separates the drive side from the valve side.

18. Device according to Claim 17, **characterized in that** the membrane (4) is a multi-ply membrane.

19. Device according to Claim 17 or 18, **characterized in that** the membrane (4) is sealingly laid between two housing parts (31, 34).

20. Device according to any one of Claims 17 to 19, **characterized in that** the membrane (4) is a disk-membrane which is penetrated by the connection body (32).

21. Device according to any one of Claims 17 to 20, **characterized in that** the connecting body (32) is connected directly or via the membrane (4) to a piston (1) and the piston (1) lies displaceably in a housing part (31) and the housing part (31) is divided into two work spaces.

22. Device according to Claim 21, **characterized in that** pressure is applied to the piston (1) by means of a spring (17) in such a way that the spring (17) presses the valve closing body (6) against a valve seat (14.1) in the nondriven state of the valve.

23. Device according to any one of Claims 17 to 22, **characterized in that** the valve has four housing parts, wherein a first housing part (43) is formed by a basic valve body, which has channels for the valve inlet (E) and outlets (A1, A2), as well as a first valve seat, and a second housing part (42) comprises the valve closing body (6) and the second valve seat, wherein the second housing part (42) partly lies in the first housing part (43) and a third housing part (41), wherein the membrane (4) sealingly lies between the second and third housing part (41, 42), and the drive, more particularly the piston (1), is arranged in the fourth housing part (43).

24. Device according to any one of Claims 17 to 23, **characterized in that** spring-tensioned balls (10, 12.1, 12.2) are arranged in all inlets or outlets (E, A₁, A₂), wherein springs (9, 11) apply pressure on the balls (10, 12.1, 12.2) in the direction of the gasket seats (8, 13, 14.1).

25. Device according to Claim 24, **characterized in that** at least the ball (12.1) is lifted from the associated gasket seat (8) in an inlet (E) of the valve (V_{3/2}) by means of a projection and/or ram (7), which is arranged on the second housing part, in the assembled condition of the valve.

26. Device according to any one of Claims 17 to 25, **characterized in that** the second housing part has a cylindrical base body, which comprises a first channel continuously along the axis, wherein a valve seat for the valve closing body is arranged in the first channel, and **in that** a second continuous channel is arranged coaxially to the first continuous channel and a further third channel, emanating from the second flat side of the base body extends up to the first channel in the area in front of the valve seat.

27. Device according to Claim 26, **characterized in that** the base body has an encircling groove, in which a ring gasket lies to form a seal against the first housing part.

28. Device according to Claim 27, **characterized in that** two cylindrical projections are integrally formed on the second flat side of the base body, through which the second and/or third channel extends, and the projections sealingly lie in the first housing part, wherein the channels correspond to channels of the first housing part.

29. Method for mixing a plurality of components using a device according to any one of the preceding claims, **characterized in that** the components, in a first process step which is called recirculation, are conveyed from the associated conveying devices by means of the valve (27) and the device back to the associated storage container, when the needle valves are closed, wherein the conveying devices are controlled in such a manner that they convey the particular component at a predetermined flow rate, which is required for the next mixing process, and **in that** the device for adjusting pressure in the connection line between valve (27) and conveying device adjusts and/or regulates a pre-determined pressure.

30. Method according to Claim 29, **characterized in that** the recirculation ends after a constant pressure level and material flow are reached and the mixing process is started by opening the needle valves in each case associated with the required components and by switching over the associated valves (27).

31. Method according to Claim 30, **characterized in that** the needle valves are opened and the valves (27) are switched over near or at the same time.

## Revendications

1. Dispositif pour le mélange de deux ou plusieurs peintures ou composants (Fᵢ), composé d'un corps de base (23) qui présente une chambre de mélange (25) dans laquelle se terminent plusieurs canaux d'amenée (Zᵢ) pour introduire les peintures ou composants (Fᵢ) dans la chambre de mélange (25), et dans lequel les canaux d'amenée (Zᵢ) peuvent être fermés au moyen de soupapes à pointeau (24), dans lequel des dispositifs de pompage (Pᵢ) pompent les composants (Fᵢ) depuis leur réservoir de stockage associé jusqu'au canal d'amenée respectif (Zᵢ), dans lequel lorsque la soupape à pointeau (24) est fermée, c'est-à-dire lors du recyclage, le composant retourne au réservoir de stockage, dans lequel une soupape (27) relie au choix le dispositif de pompage (Pᵢ) au canal d'amenée associé (Zᵢ) ou au réservoir de stockage (R), **caractérisé en ce qu'**au moins entre chaque soupape (27) et le réservoir de stockage associé (R) une soupape de régulation de pression (Dᵢ) est intercalée pour régler ou réguler une pression pouvant être prédéterminée, et **en ce que** respectivement un dispositif de mesure (Mᵢ) détermine la pression dans la conduite de liaison respective entre chaque dispositif de pompage (Pᵢ) et la soupape associée (27) et **en ce qu'**un dispositif de commande pilote la soupape de régulation de pression (Dᵢ) respective à l'aide de la pression déterminée.

2. Dispositif selon la revendication 1, **caractérisé en ce que** le dispositif de commande (S) présente une mémoire (Sp), dans laquelle une base de connaissances est stockée à l'aide de laquelle le dispositif de commande (S) détermine la pression à régler au moyen de la soupape de pression (Dᵢ) respective et produit des signaux de commande correspondants pour la soupape de régulation de pression (Dᵢ).

3. Dispositif selon la revendication 2, **caractérisé en ce que** dans la base de connaissances sont stockées les relations entre les grandeurs de courant volumique, viscosité, comportement thermique, viscoélasticité, pression nécessaire dans la chambre de mélange et pression à régler pour les composants en cours de recyclage.

4. Dispositif selon l'une quelconque des revendications précédentes, **caractérisé en ce qu'**un élément de commande, en particulier le dispositif de commande (S) commute les soupapes à pointeau (24) nécessaires au mélange et les soupapes (27) en même temps ou presque en même temps.

5. Dispositif selon l'une quelconque des revendications précédentes, **caractérisé en ce que** l'élément de commande commute le dispositif sur le fonctionnement de mélange au plutôt seulement avant le recyclage lorsque les dispositifs de mesure pour les composants respectivement nécessaires ont déterminé la pression respectivement nécessaire.

6. Dispositif selon l'une quelconque des revendications précédentes, **caractérisé en ce que** le dispositif présente une tête de mélange dont les canaux d'amenée (Zᵢ) s'étendent du bord extérieur (W) de son corps de base (23) vers l'intérieur en direction de la chambre de mélange (25).

7. Dispositif selon l'une quelconque des revendications précédentes, **caractérisé en ce que** les canaux d'amenée (Zᵢ) s'amincissent de façon conique dans la zone d'extrémité avant l'entrée dans la chambre de mélange (25) à partir de la section transversale, dans lequel la conicité (K) forme le siège de soupape (VS) pour le pointeau de soupape (24).

8. Dispositif selon l'une quelconque des revendications précédentes, **caractérisé en ce que** les canaux d'amenée (Zᵢ) s'étendent dans la direction radiale vers la chambre de mélange (25) et/ou en parallèle à la direction radiale dans le corps de base (23).

9. Dispositif selon l'une quelconque des revendications précédentes, **caractérisé en ce que** les ouvertures de sortie (O) des canaux d'amenée (Zᵢ) sont disposées ou orientées de telle sorte que les peintures ou composants (Fᵢ) sont introduits ou injectés par l'intermédiaire des canaux d'amenée (Zᵢ) de façon radiale ou tangentielle ou sous un angle intermédiaire dans la chambre de mélange (25).

10. Dispositif selon l'une quelconque des revendications précédentes, **caractérisé en ce que** la chambre de mélange (25) présente en particulier une sortie axiale (A) pour sortir les peintures ou composants mélangés entre eux.

11. Dispositif selon l'une quelconque des revendications précédentes, **caractérisé en ce que** le dispositif de brassage (29), par exemple sous forme d'un mixeur, est disposé dans la chambre de mélange (25) et mélange entre eux les composants (Fᵢ) injectés.

12. Dispositif selon l'une quelconque des revendications précédentes, **caractérisé en ce que** le corps de base (23) se présente sous forme de disque, dans lequel les canaux d'amenée (Zᵢ) s'étendent depuis les parois latérales plates (W) vers l'intérieur en direction de la chambre de mélange (25).

13. Dispositif selon la revendication 12, **caractérisé en ce que** le contour du corps de base (23) correspond à un polygone équilatéral, dans lequel le nombre des parois latérales plates (W) correspond au nombre des canaux d'amenée (Zᵢ).

14. Dispositif selon l'une quelconque des revendications précédentes, **caractérisé en ce qu'**au moins un canal (Z_{R}) pour l'introduction d'un fluide de nettoyage s'étend dans la chambre de mélange (25).

15. Dispositif selon l'une quelconque des revendications précédentes, **caractérisé en ce que** les pointeaux de soupape (24) sont entraînés de façon hydraulique, pneumatique, magnétique ou électromagnétique.

16. Dispositif selon l'une quelconque des revendications précédentes, **caractérisé en ce qu'**au moins un canal d'amenée est relié à une sortie (A₁) d'une soupape à siège à 3/2 voies (V_{3/2}) associée, dans lequel l'entrée de la soupape à siège à 3/2 voies (V_{3/2}) est reliée à un dispositif de pompage (P) et l'autre sortie (S₂) est reliée à un réservoir (R) pour le composant ou la peinture (Fᵢ) à introduire à travers le canal d'amenée (Zᵢ).

17. Dispositif selon la revendication 16, **caractérisé en ce que** la soupape à siège à 3/2 voies (V_{3/2}) présente un corps de fermeture entraîné (6) qui peut être déplacé en va-et-vient entre deux sièges de soupape (14.1, 14.2), dans lequel le corps de fermeture de soupape (6) est en communication par l'intermédiaire d'un corps de liaison (32) avec un élément d'entraînement de soupape, dans lequel un diaphragme (4) sépare de façon étanche le côté entraînement du côté soupape.

18. Dispositif selon la revendication 17, **caractérisé en ce que** le diaphragme (4) est un diaphragme multicouche.

19. Dispositif selon la revendication 17 ou 18, **caractérisé en ce que** le diaphragme (4) est posé de façon étanche entre deux parties de boîtier (31, 34).

20. Dispositif selon l'une quelconque des revendications 17 à 19, **caractérisé en ce que** le diaphragme (4) est un diaphragme à disque qui est traversé par le corps de liaison (32).

21. Dispositif selon l'une quelconque des revendications 17 à 20, **caractérisé en ce que** le corps de liaison (32) est en liaison avec un piston (1) directement ou par l'intermédiaire du diaphragme (4), et **en ce que** le piston (1) est posé de façon mobile dans une partie de boîtier (31) et sépare la partie de boîtier (31) en deux espaces de travail.

22. Dispositif selon la revendication 21, **caractérisé en ce que** le piston (1) est mis sous pression au moyen d'un ressort (17) de telle sorte que le ressort (17) pousse le corps de fermeture de soupape (6) contre un siège de soupape (14.1) à l'état non entraîné de la soupape.

23. Dispositif selon l'une quelconque des revendications 17 à 22, **caractérisé en ce que** la soupape présente quatre parties de boîtier, dans lequel une première partie de boîtier (43) est formée par un corps de base de soupape qui présente des canaux pour les entrées (E) et sorties (A₁, A₂) de soupape, ainsi qu'un premier siège de soupape, et une deuxième partie de boîtier (42) présente le corps de fermeture de soupape (6) et le deuxième siège de soupape, dans lequel la deuxième partie de boîtier (42) est posée en partie dans la première partie de boîtier (43) et une troisième partie de boîtier (41), dans lequel le diaphragme (4) est posé de façon étanche entre la deuxième et troisième partie de boîtier (41, 42), et dans la quatrième partie de boîtier (43), l'élément d'entraînement, en particulier le piston (1), est disposé.

24. Dispositif selon l'une quelconque des revendications 17 à 23, **caractérisé en ce que** dans toutes les entrées ou sorties (E, A₁, A₂), des billes chargées par ressort (10, 12.1, 12.2) sont disposées, dans lequel des ressorts (9, 11) mettent les billes (10, 12.1, 12.2) sous pression en direction de sièges d'étanchéité (8, 13, 14.1).

25. Dispositif selon la revendication 24, **caractérisé en ce qu'**au moins la bille (12.1) dans une entrée (E) de la soupape (V_{3/2}) est soulevée au moyen d'une saillie ou d'un mandrin (7), qui est disposé(e) sur la deuxième partie de boîtier, à l'état assemblé de la soupape, par rapport au siège d'étanchéité (8) associé.

26. Dispositif selon l'une quelconque des revendications 17 à 25, **caractérisé en ce que** la deuxième partie de boîtier présente un corps de base cylindrique qui présente un premier canal traversant le long de l'axe, dans lequel, dans le premier canal, un siège de soupape pour le corps de fermeture de soupape est disposé, et **en ce qu'**un deuxième canal traversant est disposé de façon coaxiale au premier canal traversant, et **en ce qu'**un troisième canal s'étend jusqu'au premier canal au niveau du siège de soupape en partant du deuxième côté plat du corps de base.

27. Dispositif selon la revendication 26, **caractérisé en ce que** le corps de base présente une rainure périphérique dans laquelle est posée une bague d'étanchéité pour assurer l'étanchéité par rapport à la première partie de boîtier.

28. Dispositif selon la revendication 27, **caractérisé en ce que** sur le deuxième côté plat du corps de base, deux saillies cylindriques sont rapportées à travers lesquelles s'étend le deuxième ou troisième canal, et **en ce que** les saillies sont posées de façon étanche dans la première partie de boîtier, dans lequel les canaux correspondent avec des canaux de la première partie de boîtier.

29. Procédé pour mélanger plusieurs composants à l'aide d'un dispositif selon l'une quelconque des revendications précédentes, **caractérisé en ce qu'**au cours d'une première étape de procédé, appelée recyclage, les composants sont pompés, lorsque les soupapes à pointeau sont fermées, depuis les dispositifs de pompage associés, par l'intermédiaire de la soupape (27) et du dispositif de retour vers le réservoir de stockage associé, dans lequel les dispositifs de pompage sont pilotés de telle sorte qu'ils pompent le composant respectif avec un courant volumique prédéterminé qui est nécessaire à l'opération de mélange suivante, et **en ce que** le dispositif pour le réglage d'une pression dans la conduite de liaison entre la soupape (27) et le dispositif de pompage règle ou régule une pression prédéterminée.

30. Procédé selon la revendication 29, **caractérisé en ce qu'**après avoir atteint un niveau de pression et un débit de matière constants, le recyclage est terminé, et **en ce que** l'ouverture des soupapes à pointeau respectivement associées aux composants nécessaires et la commutation des soupapes associées (27) déclenche l'opération de mélange.

31. Procédé selon la revendication 30, **caractérisé en ce que** l'ouverture des soupapes à pointeau et la commutation des soupapes (27) s'effectuent presque en même temps ou en même temps.
